# EUROPEAN PATENT APPLICATION

(11) **EP 4 654 404 A1**
(43) Date of publication of application: **26.11.2025**
(21) Application number: 24744609.9
(22) Date of filing: 15.01.2024
(51) Int. Cl.: H02G 1/14

(54) **MULTICORE CABLE PROCESSING DEVICE**

(30) Priority: 18.01.2023 JP 2023005722
(71) Applicant: ShinMaywa Industries, Ltd., Takarazuka-shi, Hyogo 665-8550 (JP)
(72) Inventor: FUJITA, Seiichirou, Takarazuka-shi, Hyogo 665-8550 (JP)
(74) Representative: Grünecker Patent- und Rechtsanwälte PartG mbB
(86) International application number: PCT/JP2024/000767
(87) International publication number: WO 2024/154686

(57) **Abstract**

A processing device 1 for a multi-core cable 3 includes a holding member 41 holding a non-tip portion 5B of a sheath 5, a gripping device 50 gripping a tip portion 5A of the sheath 5 or electric wires 4 and 6 exposed from the sheath 5, a pull-out device 60 pulling out the tip portion 5A of the sheath 5, a rotation device 70 rotating the holding member 41 and a gripping member 56 with respect to each other, a detection device 80 detecting at least one of a twist pitch and a twist strength of the plurality of electric wires 4 and 6 of the multi-core cable 3, and a controller 100. The controller 100 adjusts at least one of operating conditions of the gripping device 50, the pull-out device 60 and the rotation device 70 based on the detection performed by the detection device 80.

## Description

### Technical Field

The present invention relates to a multi-core cable processing device

### Background Art

Conventionally, a multi-core cable including a plurality of electric wires and a sheath covering the electric wires is known. Such a multi-core cable is subjected to a process of making a cut in a tip portion of the sheath and a process of pulling out the tip portion of the sheath to expose a tip portion of each of the electric wires. Then, the multi-core cable is subjected to a process of, for example, crimping a terminal to the tip portion of each of the electric wires. However, if a twist remains in the electric wires when the tip portion of the sheath is pulled out, subsequent processes cannot be performed in a satisfactory manner on the electric wires. Therefore, devices correcting such a remaining twist of the electric wires have conventionally been proposed.

For example, Patent Literature 1 discloses an untwisting device for electric wires that includes a gripping clamp gripping a tip portion of a sheath having a cut made therein, a holding clamp holding a non-tip portion of the sheath, a pull-out device moving the gripping clamp away from the holding clamp to pull out the tip portion of the sheath, and a rotation device rotating the tip portion of the sheath gripped by the gripping clamp. The untwisting device disclosed in Patent Literature 1 combines a control of pulling out the tip portion of the sheath without rotating the gripping clamp and a control of pulling out the tip portion of the sheath while rotating the gripping clamp, thus to untwist the electric wires and pull out the sheath.

### Citation List

### Patent Literature

Patent Literature 1 : International Publication WO2022/091788

### Summary of Invention

### Technical Problem

In a multi-core cable, there is a variance in a twisting state of electric wires. The present inventor has noticed that such a variance is of an unignorable level for constantly untwisting the electric wires of the multi-core cable in a satisfactory manner. According to the knowledge of the present inventor, the state of the post-untwisting electric wires is varied due to the variance in the twisted state of the electric wires of the multi-core cable. As a result, the multi-core cable is generated that includes the electric wires insufficiently untwisted or twisted in an opposite direction due to excessive untwisting.

The present invention, made in light of such a point, has an object of suppressing a variance in the state of a plurality of post-untwisting electric wires of a multi-core cable, the variance being caused by the variance in the twisted state of the electric wires.

### Solution to Problem

A processing device for a multi-core cable disclosed herein is a processing device processing the multi-core cable including a plurality of twisted electric wires and a sheath covering the plurality of electric wires. The processing device includes a holding member configured to hold a non-tip portion of the sheath having a cut made between a tip portion and the non-tip portion; a gripping device including a gripping member configured to grip the tip portion of the sheath or the plurality of electric wires exposed; a pull-out device configured to pull out the tip portion of the sheath; a rotation device configured to rotate the holding member and the gripping member with respect to each other; a detection device configured to detect at least one of a twist pitch and a twist strength of the plurality of electric wires; and a controller configured to control the gripping device, the pull-out device and the rotation device. The controller includes a condition adjuster configured to adjust at least one of operating conditions of the gripping device, the pull-out device and the rotation device based on the detection performed by the detection device.

According to the above-described processing device for the multi-core cable, at least one of the twist pitch and the twist strength is detected as an index of the twisting state of the electric wires of the multi-core cable, and at least one of the operating conditions of the gripping device, the pull-out device and the rotation device is adjusted based on the detection. Therefore, at least one of the twist pitch and the twist strength is reflected on the untwisting conditions of the electric wires. As a result, the variance in the state of the post-untwisting electric wires caused by the variance in the twisting state of the plurality of electric wires of the multi-core cable is suppressed.

According to a preferred embodiment of the processing device for the multi-core cable, the condition adjuster adjusts at least one of a rotation angle and a rotation speed at which the rotation device rotates the holding member and the gripping member with respect to each other, a pulling speed and a pulling force at which the pull-out device pulls out the tip portion of the sheath, and a gripping force of the gripping device.

According to the above-described processing device for the multi-core cable, the condition adjuster adjusts the above-described operating conditions. At least one of the above-described operating conditions is adjusted, so that an influence of the variance in the twist pitch or the twist strength of the plurality of electric wires is suppressed, and the variance in the state of the post-untwisting electric wires is suppressed.

According to a preferred embodiment of the processing device for the multi-core cable, the controller includes a first registration unit in which at least one of a standard twist pitch and a standard twist strength of the plurality of electric wires is registered. The condition adjuster adjusts at least one of the rotation angle and the rotation speed of the rotation device, the pulling speed and the pulling force of the pull-out device, and the gripping force of the gripping device based on at least one of a comparison between the twist pitch of the plurality of electric wires detected by the detection device and the standard twist pitch and a comparison between the twist strength of the plurality of electric wires detected by the detection device and the standard twist strength.

According to the above-described processing device for the multi-core cable, at least one of the twist pitch and the twist strength of the plurality of electric wires is compared against the registered standard twist pitch or twist strength, and the operating conditions are adjusted based on the difference thereof from the standard twist pitch or twist strength. According to such a configuration, the twist pitch or the twist strength as the reference is constant. Therefore, an adjustment with a high degree of reproducibility is performed.

According to a preferred embodiment of the processing device for the multi-core cable, the controller includes a first registration unit in which a standard twist pitch of the plurality of electric wires is registered, and a second registration unit in which a standard rotation angle at which the rotation device rotates the holding member and the gripping member with respect to each other is registered. The detection device is configured to detect the twist pitch of the plurality of electric wires. In a case where the detected twist pitch is shorter than the standard twist pitch, the condition adjuster makes a rotation angle of the rotation device larger than the standard rotation angle, and in a case where the detected twist pitch is longer than the standard twist pitch, the condition adjuster makes the rotation angle of the rotation device smaller than the standard rotation angle.

According to the above-described processing device for the multi-core cable, for the multi-core cable in which the twist pitch is shorter than the standard twist pitch and the electric wires are twisted a large number of times, an adjustment is performed to increase the amount of untwisting. For the multi-core cable in which the twist pitch is longer than the standard twist pitch and the electric wires are twisted a small number of times, an adjustment is performed to decrease the amount of untwisting. Therefore, the variance in the state of the post-untwisting electric wires caused by the variance in the twist pitch of the plurality of electric wires of the multi-core cable is suppressed.

According to a preferred embodiment of the processing device for the multi-core cable, the rotation device is configured to rotate the holding member and the gripping member with respect to each other around a predetermined rotation axis. The detection device is configured to detect a rotation position of a specific electric wire among the plurality of electric wires at least at a first detection position on the rotation axis and a second detection position on a tip side with respect to the first detection position. The condition adjuster includes a first detection controller, a calculator, a second detection controller and a corrector. The first detection controller causes the detection device to detect the rotation position of the specific electric wire at the first detection position in a state where the tip portion of the sheath is pulled out by a first distance by which the plurality of electric wires are exposed at the first detection position and the second detection position. The calculator finds an expected rotation position of the specific electric wire at the second detection position in a case where the twist pitch is equal to a standard twist pitch, based on the rotation position of the specific electric wire at the first detection position. The second detection controller causes the detection device to detect the rotation position of the specific electric wire at the second detection position. The corrector corrects a rotation angle of the rotation device based on a difference between the expected rotation position found by the calculator and the detected rotation position of the specific electric wire at the second detection position.

According to the above-described processing device for the multi-core cable, the rotation position of the specific electric wire is found by the detection of the specific electric wire at the first detection position. As a result, the rotation position of the specific electric wire at the second detection position in the case where the twist pitch of the electric wires is equal to the standard twist pitch is expected. This expected rotation position is the rotation position at which the specific electric wires should be. The difference between the expected rotation position and the actual rotation position of the specific electric wire is corrected, so that the variance in the state of the post-untwisting electric wires is suppressed.

According to a preferred embodiment, the processing device for the multi-core cable further includes a base-side rotation device configured to rotate the multi-core cable around a rotation axis matching the rotation axis of the rotation device. The condition adjuster includes a movement controller configured to control the base-side rotation device based on the rotation position, of the specific electric wire at the first detection position, detected under the control of the first detection controller, to move the specific electric wire to a predetermined rotation position. The calculator is configured to find an expected rotation position of the specific electric wire after the specific electric wire is moved by the movement controller.

According to the above-described processing device for the multi-core cable, it is sufficient that the detection device is configured to detect that the specific electric wire is at the predetermined rotation position at the first detection position. It is not necessary that the detection device is configured to detect the rotation position of the specific electric wire regardless of the rotation position thereof at the first detection position. Therefore, the configuration of the detection device is simplified.

According to a preferred embodiment of the processing device for the multi-core cable, the condition adjuster includes another movement controller configured to control the rotation device to move the specific electric wire at the second detection position to the expected rotation position.

According to the above-described processing device for the multi-core cable, the specific electric wire at the second detection position is moved to the expected rotation position, so that the untwisted state of the electric wires is directly corrected. Therefore, the post-untwisting state of the electric wires is made better.

According to a preferred embodiment of the processing device for the multi-core cable, the detection device includes a probe contacting the sheath to be displaced, and is configured to find the twist pitch of the plurality of electric wires covered with the sheath, based on a fluctuation cycle of the displacement of the probe.

According to the above-described processing device for the multi-core cable, the twist pitch of the electric wires is learned before the sheath is pulled out to expose the electric wires. Therefore, it is not necessary to pause the untwisting of the electric wires in the middle to detect the twist pitch of the electric wires.

According to a preferred embodiment of the processing device for the multi-core cable, the detection device includes a contactless displacement meter capable of measuring a distance from the plurality of electric wires exposed from the sheath, and is configured to find the twist pitch of the plurality of electric wires based on a fluctuation cycle of the distance from the plurality of electric wires measured by the contactless displacement meter.

According to a preferred embodiment of the processing device for the multi-core cable, one of the plurality of electric wires is a drain wire having exposed metal strands, and the detection device includes an electrode contacting the drain wire exposed from the sheath to detect the drain wire. The detection device is configured to find the twist pitch of the plurality of electrode wires based on the interval, in a longitudinal direction of the multi-core cable, between positions at which the electrode detects the drain wire.

According to another preferred embodiment of the processing device for the multi-core cable, the detection device includes an image capturing device configured to acquire an image of the plurality of electric wires exposed from the sheath, and is configured to find the twist pitch of the plurality of electric wires based on the image acquired by the image capturing device.

According to these processing devices for the multi-core cable, the twist pitch of the electric wires is measured in a state where the plurality of electric wires are exposed from the sheath. Therefore, the twist pitch of the electric wires is measured more accurately.

According to a preferred embodiment, the processing device for the multi-core cable further includes a length measurement device. The length measurement device includes a transportation device configured to transport the multi-core cable by a predetermined length at each time of the transportation, and a cutting device configured to cut the multi-core cable transported by the transportation device into the predetermined length. The transportation device includes a transportation motor. The detection device is configured to measure a rotation torque of the transportation motor. The condition adjuster includes a pitch estimator configured to estimate the twist pitch of the plurality of electric wires based on a fluctuation cycle of the rotation torque measured by the detection device.

According to the above-described processing device for the multi-core cable, the twist pitch of the electric wires is learned before the sheath is pulled out to expose the electric wires. Therefore, it is not necessary to pause the untwisting of the electric wires in the middle to detect the twist pitch of the electric wires. In addition, the twist pitch of the electric wires is measured in parallel with the step of cutting the multi-core cable into the predetermined length. Therefore, the productivity of the processing of the multi-core cable is improved.

According to a preferred embodiment of the processing device for the multi-core cable, the detection device is configured to acquire a transportation sound of the multi-core cable made by the transportation device. The condition adjuster includes a pitch estimator configured to estimate the twist pitch of the plurality of electric wires based on a fluctuation cycle of the transportation sound acquired by the detection device.

According to the above-described processing device for the multi-core cable also, the productivity of the processing of the multi-core cable is improved.

According to a preferred embodiment of the processing device for the multi-core cable, the pull-out device is configured to move at least one of the gripping member and the holding member such that the gripping member moves away from the holding member, to pull out the tip portion of the sheath. The controller includes a first registration unit and a second registration unit. In the first registration unit, a standard twist strength of the plurality of electric wires is registered. In the second registration unit, a standard rotation speed at which the rotation device rotates the holding member and the gripping member with respect to each other, and a standard pulling speed at which the pull-out device pulls out the tip portion of the sheath, are registered. The detection device is configured to detect the twist strength of the plurality of electric wires. In a case where the detected twist strength is stronger than the standard twist strength, the condition adjuster makes a rotation speed of the rotation device slower than the standard rotation speed, and makes a pulling speed of the pull-out device slower than the standard pulling speed.

According to the above-described processing device for the multi-core cable, when the twist of the electric wires is strong, the electric wires are untwisted more slowly than under the standard untwisting conditions. This causes a sufficient length of time to be taken to correct the remaining twist. Therefore, the remaining twist of the electric wires is easily corrected even if being strong.

According to a preferred embodiment of the processing device for the multi-core cable, the pull-out device is configured to move at least one of the gripping member and the holding member such that the gripping member moves away from the holding member, to pull out the tip portion of the sheath. The controller includes a first registration unit in which a standard twist strength of the plurality of electric wires is registered, and a second registration unit in which a standard pulling force at which the pull-out device pulls out the tip portion of the sheath is registered. The detection device is configured to detect the twist strength of the plurality of electric wires. In a case where the detected twist strength is stronger than the standard twist strength, the condition adjuster makes a pulling force of the pull-out device larger than the standard pulling force.

According to the above-described processing device for the multi-core cable, when the twist of the electric wires is strong, the electric wires are pulled more strongly than under the standard untwisting conditions. This corrects the remaining twist more strongly. Therefore, the remaining twist of the electric wires is corrected easily even if being strong.

According to a preferred embodiment of the processing device for the multi-core cable, the controller includes a first registration unit in which a standard twist strength of the plurality of electric wires is registered, and a second registration unit in which a standard gripping force of the gripping device is registered. The detection device is configured to detect the twist strength of the plurality of electric wires. In a case where the detected twist strength is stronger than the standard twist strength, the condition adjuster makes a gripping force of the gripping device larger than the standard gripping force.

According to the above-described processing device for the multi-core cable, the rotation force of the gripping member is efficiently transmitted to the electric wires. Therefore, the remaining twist of the electric wires is corrected easily even if being strong.

According to a preferred embodiment of the processing device for the multi-core cable, the controller includes a first registration unit in which a standard twist strength of the plurality of electric wires is registered, and a second registration unit in which a standard rotation angle at which the rotation device rotates the holding member and the gripping member with respect to each other, and a standard rotation direction in which the rotation device rotates the holding member and the gripping member with respect to each other, are registered. The detection device is configured to detect the twist strength of the plurality of electric wires. In a case where the detected twist strength is stronger than the standard twist strength, the condition adjuster makes a relative rotation angle, at which the holding member and the gripping member are rotated in the standard rotation direction, larger than the standard rotation angle, and after the rotation of the holding member and the gripping member in the standard rotation direction is finished, rotates the holding member and the gripping member in an opposite direction to the standard rotation direction at the same rotation angle as the rotation angle enlarged regarding the standard rotation direction.

According to the above-described processing device for the multi-core cable, when the twist of the electric wires is strong, the electric wires are untwisted by a larger amount than under the standard untwisting conditions. Therefore, the remaining twist of the electric wires is corrected even if being strong. Merely with this process, the electric wires are twisted in the opposite direction due to the excessive untwisting. Therefore, the processing device untwists the electric wires in the opposite direction by the amount excessively untwisted.

According to a preferred embodiment of the processing device for the multi-core cable, the detection device is configured to measure a rotation torque by which the rotation device rotates the holding member and the gripping member with respect to each other. In the first registration unit, a standard rotation torque by which the rotation device rotates the holding member and the gripping member with respect to each other is registered as the standard twist strength.

According to the above-described processing device for the multi-core cable, the twist strength of the electric wires is measured as the rotation torque of the rotation device.

### Advantageous Effects of Invention

The present invention suppresses a variance in the state of a plurality of post-untwisting electric wires of a multi-core cable, the variance being caused by the variance in the twisted state of the electric wires.

### Brief Description of Drawings

[Fig. 1] Fig. 1 is a block diagram of a processing device for a multi-core cable according to one embodiment.
[Fig. 2] Fig. 2 is a plan view of the multi-core cable.
[Fig. 3] Fig. 3 is a plan view showing an inner portion of a tip portion of the multi-core cable.
[Fig. 4] Fig. 4 is a perspective view of an untwisting device according to one embodiment.
[Fig. 5] Fig. 5 is a side view of the untwisting device.
[Fig. 6] Fig. 6 is a flowchart showing a process of untwisting electric wires.
[Fig. 7] Fig. 7 is a schematic side view of an untwisting device according to a modification that shows a plurality of detection positions of a detection device.
[Fig. 8] Fig. 8 is a schematic plan view of a length measurement device according to embodiment 2.
[Fig. 9] Fig. 9 is a schematic side view of a detection device according to modification 1 of embodiment 2.
[Fig. 10] Fig. 10 is a schematic plan view of a detection device and a transportation device according to modification 2 of embodiment 2.
[Fig. 11] Fig. 11 is a schematic side view of a detection device according to modification 3 of embodiment 2.
[Fig. 12] Fig. 12 is a schematic plan view of a detection device according to modification 4 of embodiment 2.
[Fig. 13] Fig. 13 is a schematic side view of a detection device according to modification 5 of embodiment 2.
[Fig. 14] Fig. 14 shows a table showing methods for adjusting untwisting conditions in embodiment 1 through a modification of embodiment 3.

### Description of Embodiments

### [Embodiment 1]

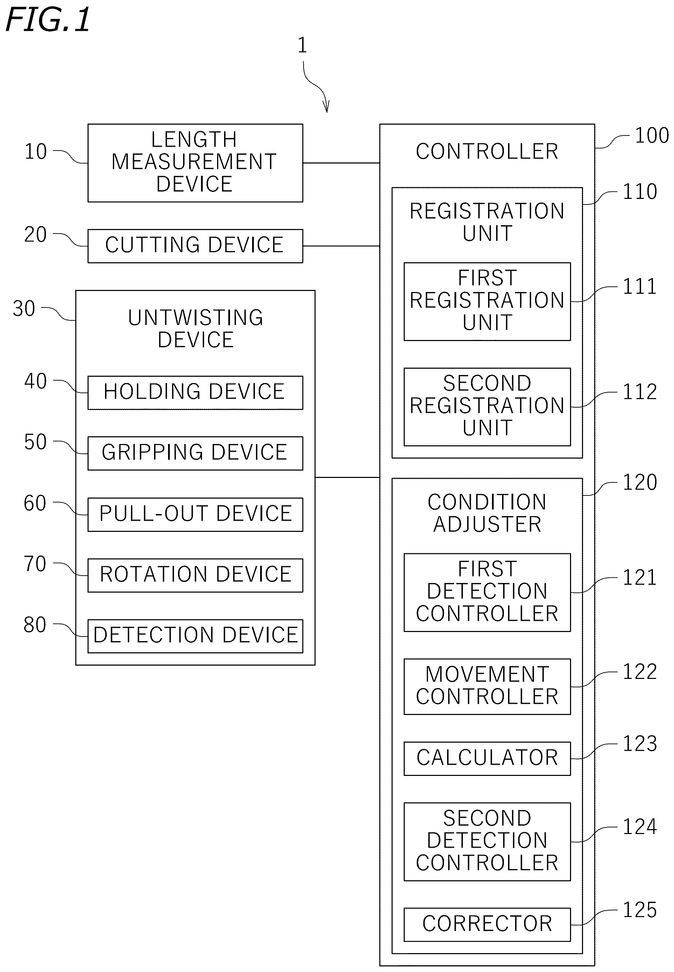

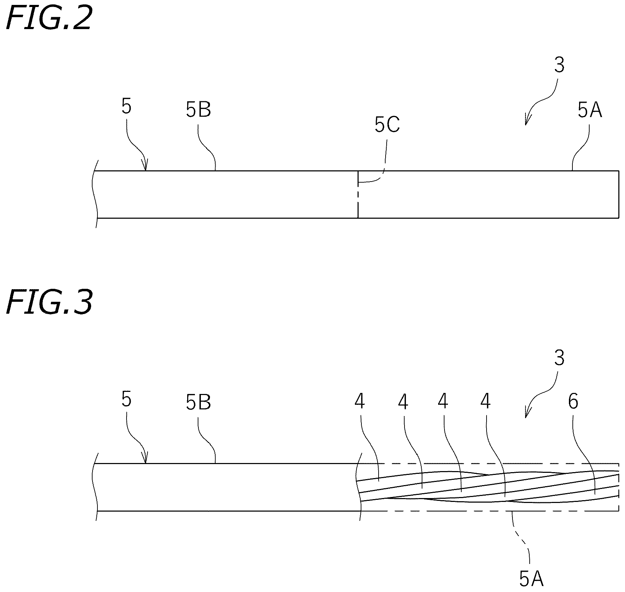

Hereinafter, a processing device for a multi-core cable according to one embodiment of the present invention will be described with reference to the drawings. Fig. 1 is a block diagram of a processing device for a multi-core cable 3 (see Fig. 2). Fig. 2 is a plan view of the multi-core cable 3. Fig. 3 is a plan view showing an inner portion of a tip portion of the multi-core cable 3. As shown in Fig. 1, the processing device 1 includes a length measurement device 10 cutting the multi-core cable 3 into a predetermined length, a cutting device 20 making a cut (also referred to as a "slit") 5C (see Fig. 2) in a sheath 5 (see Fig. 2) of the multi-core cable 3, an untwisting device 30 pulling out the sheath 5 (see Fig. 2) at a tip of the multi-core cable 3 and correcting a remaining twist of electric wires 4 and 6 (see Fig. 3) in the sheath 5, and a controller 100 controlling the length measurement device 10, the cutting device 20 and the untwisting device 30. The processing device 1 may include, for example, a stripping device stripping the electric wires 4 and 6 of a cover thereof, a crimping device crimping a terminal on the electric wires 4 and 6, or the like, but these devices are not shown or described herein.

As shown in Fig. 2 and Fig. 3, the multi-core cable 3 includes a plurality of covered electric wires 4, one uncovered electric wire 6 and the sheath 5 covering these electric wires 4 and 6. Although not shown, the electric wire 6 includes a plurality of strands formed of a conductive material such as a metal material or the like. The electric wires 4 each include a plurality of strands formed of a conductive material such as a metal material or the like and a cover formed of an insulating material such as a synthetic resin or the like and covering the strands. Hereinafter, the covered electric wires 4 and the uncovered electric wire 6 will be respectively referred to as "core wires" and a "drain wire". In this embodiment, the multi-core cable 3 includes four core wires 4. Note that there is no specific limitation on the number of the core wires 4. There is no specific limitation on the number of the drain wire(s) 6, either. There is no specific limitation on the material of the sheath 5. For example, the material of the sheath 5 is chloroprene rubber, vinyl chloride, polyethylene or the like.

The multi-core cable 3 is cut into a predetermined length by the length measurement device 10, and then the cut 5C is made in the sheath 5 by the cutting device 20. The sheath 5 is cut into a tip portion 5A and a non-tip portion 5B along the cut 5C. As shown in Fig. 3, the core wires 4 and the drain wire 6 are twisted in the sheath 5. That is, the core wires 4 and the drain wire 6 in the sheath 5 extend in a spiral manner and remains twisted. The core wires 4 and the drain wire 6 are twisted at a predetermined pitch. However, there is a variance in such a twist pitch and a twist strength among individual wires or among positions thereof. The untwisting device 30 pulls out the tip portion 5A of the sheath 5 and corrects such a remaining twist of the exposed core wires 4 and the exposed drain wire 6.

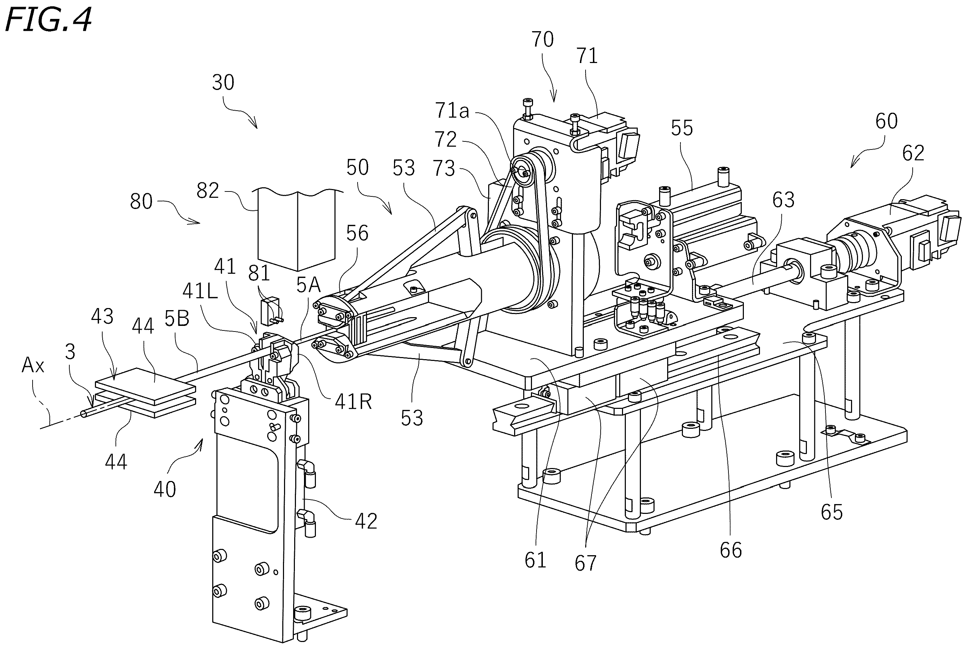

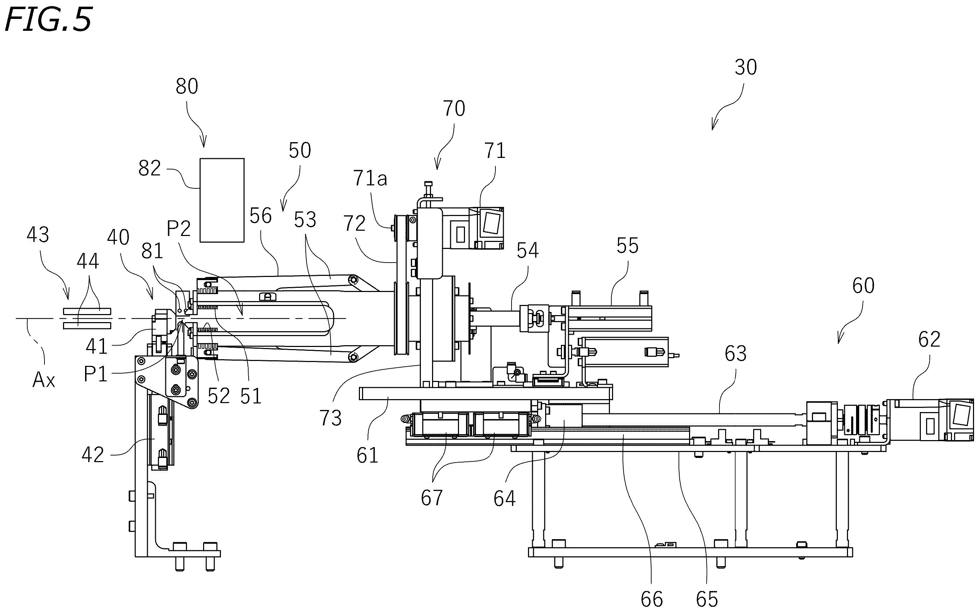

Fig. 4 is a perspective view of the untwisting device 30. Fig. 5 is a side view of the untwisting device 30. As shown in Fig. 4, the untwisting device 30 includes a holding device 40 holding the non-tip portion 5B of the sheath 5 of the multi-core cable 3, a gripping device 50 gripping the tip portion 5A, a pull-out device 60 pulling out the tip portion 5A, a rotation device 70 rotating the tip portion 5A, and a detection device 80 measuring the twist pitch of the core wires 4 and the drain wire 6. In the following description, for the sake of convenience, the side of the tip portion 5A of the sheath 5 (right side in Fig. 4) will be referred to the "front side", and the side of the non-tip portion 5B of the sheath 5 (left side in Fig. 4) will be referred to the "rear side". The tip portion 5A is pulled out forward.

As shown in Fig. 4, the holding device 40 includes a holding clamp 41 including a pair of, that is, left and right, clamp claws 41L and 41R, an actuator 42 driving the clamp claws 41L and 41R to move toward, or away from, each other, and a rotation device 43 rotating the clamp claws 41L and 41R. The actuator 42 is an air cylinder in this embodiment although there is no specific limitation on the configuration thereof. When the clamp claws 41L and 41R are moved toward each other, the holding clamp 41 is closed. As a result, the non-tip portion 5B of the sheath 5 is sandwiched, and thus is held, between the clamp claws 41L and 41R. When the clamp claws 41L and 41R are moved away from each other, the holding clamp 41 is opened. As a result, the non-tip portion 5B of the sheath 5 is released from the held state.

The rotation device 43 of the holding device 40 rotates the multi-core cable 3 (more specifically, a portion of the multi-core cable 3 closer to a base thereof than the cut 5C) around a rotation axis Ax along an axis of the multi-core cable 3 held by the clamp claws 41L and 41R. The rotation device 43 includes a pair of slide plates 44 sandwiching the multi-core cable 3 and a motor (not shown) moving the pair of slide plates 44 such that the pair of slide plates 44 are shifted in opposition directions to each other to rotate the multi-core cable 3. Note that an actuator giving a drive force to the slide plates 44 is not limited to the motor.

The gripping device 50 includes a gripping clamp 56 and an actuator 55 opening or closing the gripping clamp 56. The gripping clamp 56 includes a first clamp claw 51 and a second clamp claw 52. The first clamp claw 51 and the second clamp claw 52 face each other so as to be capable of gripping the tip portion 5A of the sheath 5. The actuator 55 is an air cylinder in this embodiment although there is no specific limitation on the configuration thereof. The gripping clamp 56 includes a link mechanism 53 coupled with the first clamp claw 51 and the second clamp claw 52, and a piston rod 54 coupled with the link mechanism 53. The piston rod 54 is coupled with the actuator 55. When the piston rod 54 extends forward, the gripping clamp 56 is opened, and the tip portion 5A is released from the state of being held by the gripping clamp 56. By contrast, when the actuator 55 moves the piston rod 54 rearward, the first clamp claw 51 and the second clamp claw 52 move toward each other. That is, when the piston rod 54 is contracted, the gripping clamp 56 is closed to grip the tip portion 5A of the sheath 5.

When the first clamp claw 51 and the second clamp claw 52 move toward each other, the tip portion 5A of the sheath 5 is sandwiched by the first clamp claw 51 and the second clamp claw 52. As a result, the tip portion 5A is gripped by the first clamp claw 51 and the second clamp claw 52. When the first clamp claw 51 and the second clamp claw 52 move away from each other, the tip portion 5A is released from the held state.

The rotation device 70 rotates the gripping clamp 56 around a rotation axis Ax. The rotation axis of the rotation device 70 matches the rotation axis Ax of the holding device 40. As shown in Fig. 5, the rotation device 70 includes a support plate 73 supporting the gripping clamp 56 such that the gripping clamp 56 is rotatable and a motor 71 giving a rotation force to the gripping clamp 56. The motor 71 is supported by the support plate 73. A rotation shaft 71a of the motor 71 and the gripping clamp 56 are coupled with each other by a belt 72. The belt 72 is a transmission member transmitting motive power of the motor 71 to the gripping clamp 56. Note that the transmission member is not limited to the belt 72, and may be a transmission member of another form such as a gear, a chain or the like. The motor 71 is an example of actuator giving a rotation force to the clamp 56, but the actuator giving a rotation force to the clamp 56 is not limited to the motor 71. In this embodiment, the rotation device 70 is configured to rotate the gripping clamp 56 to rotate the tip portion 5A of the sheath 5.

The pull-out device 60 is configured to move the gripping clamp 56, in a longitudinal direction of the multi-core cable 3, away from the holding clamp 41 to pull out the tip portion 5A of the sheath 5. The pull-out device 60 includes a movable table 61 supporting the gripping device 50 and the rotation device 70, a motor 62 moving the movable table 61 forward and rearward, and a secured table 65 supporting the movable table 61 and the motor 62. A rail 66 extending in a front-rear direction is provided on the secured table 65. Sliders 67 slidably engaged with the rail 66 are secured to the right of, and below, the movable table 61. A ball screw 63 is connected with the motor 62. As shown in Fig. 5, a slider 64 engaged with the ball screw 63 is secured to the left of, and below, the movable table 61. The slider 64 has a hole (not shown) formed therein, into which the ball screw 63 is inserted. An inner circumferential surface of the hole has a spiral groove formed therein, that is in engagement with the ball screw 63. When the motor 62 rotates in one direction, the ball screw 63 rotates in the same direction, and the slider 64 moves forward. As a result, the gripping clamp 56 moves forward. When the motor 62 rotates in the opposite direction, the ball screw 63 also rotates in the opposite direction, and the slider 64 moves rearward. As a result, the gripping clamp 56 moves rearward. In this manner, the motor 62 rotates in one direction or the opposite direction, so that the gripping clamp 56 moves forward or rearward.

The detection device 80 detects a rotation position, of a specific electric wire among the plurality of electric wires 4 and 6, around the rotation axis Ax, at a first detection position P1 on the rotation axis Ax and at a second detection position P2 on the tip side with respect to the first detection position P1. In this embodiment, the detection device 80 detects the rotation position of the drain wire 6 at the first detection position P1 and the second detection position P2. Note that it is sufficient that the detection device 80 is configured to be capable of detecting the rotation position of the drain wire 6 around the rotation axis Ax at least at the first detection position P1 and the second detection position P2. The detection device 80 may be capable of detecting the rotation position of the drain wire 6 around the rotation axis Ax also at another detection position.

As shown in Fig. 5, the detection device 80 includes electrodes 81 detecting the rotation position of the drain wire 6 at the first detection position P1 and a camera 82 detecting the rotation position of the drain wire 6 at the second detection position P2. In this embodiment, the first detection position P1 is set to be the front of, and very close to, the position of the cut 5C of the multi-core cable 3 held by the holding device 40. The electrodes 81 are provided at the first detection position P1 in the front-rear direction. The electrodes 81 are provided above the rotation axis Ax. The electrodes 81 are configured to cause an electric current to flow in the drain wire 6 to detect the drain wire 6. The electrodes 81 are capable of detecting that the drain wire 6 is at the 0 o'clock position around the rotation axis Ax. Note that the electrodes 81 may be configured to be capable of detecting that the drain wire 6 is at another position around the rotation axis Ax. The detection device 80 includes a moving device (not shown) moving the electrodes 81 toward, or away from the multi-core cable 3.

The camera 82 is provided above the rotation axis Ax. The camera 82 is provided to include at least the second detection position P2 in an image capturing range thereof, and captures an image of an upper half of the multi-core cable 3 at the second detection position P2. The detection device 80 detects the rotation position of the drain wire 6 at the second detection position P2 based on the image captured by the camera 82. The drain wire 6 has metallic luster, whereas the covered core wires 4 do not have metallic luster. Therefore, the drain wire 6 can be identified based on whether the image captured by the camera 82 has metallic luster or not. The detection device 80 may include another camera located below the rotation axis Ax so as to be capable of detecting the drain wire 6 even in the case where the drain wire 6 is in a lower half of the multi-core cable 3.

The rotation position of the drain wire 6 at the first detection position P1 may also be detected by the camera 82. Alternatively, the rotation position of the drain wire 6 at the first detection position P1 may be detected by another camera located to the rear of the camera 82. The detection device 80 may be configured to detect the core wires 4 covered with a cover of a specific color, instead of the drain wire 6. The use of an image capturing device such as a camera or the like makes it possible to detect a specific core wire 4. Alternatively, the rotation position of the drain wire 6 at the second detection position P2 may also be detected by the electrodes. There is no specific limitation on the type of the electric wires 4 or 6 to be detected by the detection device 80 or the method of detection by the detection device 80.

As shown in Fig. 1, the controller 100 is connected with the length measurement device 10, the cutting device 20, and the holding device 40, the gripping device 50, the pull-out device 60, the rotation device 70 and the detection device 80 of the untwisting device 30, and controls operations of these devices. There is no specific limitation on the configuration of the controller 100. The controller 100 may include, for example, a central processing unit (hereinafter, referred to as a "CPU"), a ROM storing a program or the like to be executed by the CPU, a RAM and the like. Each of portions of the controller 100 may be formed of software or hardware. Each portion of the controller 100 may be a processor or a circuit. The controller 100 may be, for example, a programmable controller, a computer or the like.

As shown in Fig. 1, the controller 100 includes a registration unit 110 and a condition adjuster 120. The registration unit 110 includes a first registration unit 111 in which a standard twist pitch of the plurality of electric wires 4 and 6 is registered, and a second registration unit 112 in which standard untwisting conditions are registered. The "standard twist pitch" of the plurality of electric wires 4 and 6 refers to, for example, a representative twist pitch such as a twist pitch described in delivery specifications of the multi-core cable 3. In the actual multi-core cable 3, the twist pitch of the electric wires 4 and 6 generally involves a tolerance and changes within the range of the tolerance. The "standard untwisting conditions" refers to untwisting conditions corresponding to the center of the tolerance. In this embodiment, the untwisting conditions include a rotation angle of the gripping clamp 56, a rotation speed of the gripping clamp 56, a pulling force of the pull-out device 60, and a pulling speed of the pull-out device 60. In the first registration unit 111, a plurality of standard twist pitches for a plurality of types of the multi-core cable 3 may be registered. In this case, in the second registration unit 112, a plurality of sets of standard untwisting conditions respectively corresponding to the plurality of standard twist pitches may be registered.

A standard rotation angle of the gripping clamp 56 is a standard rotation angle at which the rotation device 70 rotates the tip portion 5A of the sheath (the standard rotation angle corresponds to the standard twist pitch and is registered). The standard rotation angle of the gripping clamp 56 is a total rotation angle at which the gripping clamp 56 is rotated until the finish of the rotation. A standard rotation speed of the gripping clamp 56 is a standard rotation speed at which the rotation device 70 rotates the tip portion 5A of the sheath (the standard rotation speed corresponds to the standard twist pitch and is registered). The standard rotation speed may be changed as described in Patent Literature 1.

A standard pulling force of the pull-out device 60 is a standard pulling force at which the pull-out device 60 pulls out the tip portion 5A of the sheath 5, and, in this embodiment, is a torque of the motor 62. The torque of the motor 62 is adjustable by, for example, a magnitude of the electric current to flow in the motor 62. A standard pulling speed of the pull-out device 60 is a standard pulling speed at which the pull-out device 60 pulls out the tip portion 5A of the sheath 5, and, in this embodiment, is a rotation speed of the motor 62. The rotation speed of the motor 62 is directly or indirectly measurable by, for example, an encoder or the like built in the motor 62 or provided at another position in the pull-out device 60, and is controllable based on the measurement. The torque as the standard pulling force may be changed in the middle, and the standard pulling speed may be changed in the middle.

The condition adjuster 120 adjusts at least one of operating conditions of the gripping device 50, the pull-out device 60 and the rotation device 70 based on the twist pitch of the electric wires 4 and 6 detected by the detection device 80. In this embodiment, the condition adjuster 120 adjusts the rotation angle at which the rotation device 70 rotates the tip portion 5A of the sheath 5 based on a comparison between the twist pitch of the plurality of electric wires 4 and 6 detected by the detection device 80 and the standard twist pitch. With such a process, the twist pitch as the reference is always the same. Therefore, an adjustment with a high degree of reproducibility is performed. More specifically, in the case where the twist pitch detected by the detection device 80 is shorter than the standard twist pitch, the condition adjuster 120 makes the rotation angle, at which the tip portion 5A of the sheath 5 is rotated, larger than the standard rotation angle. In the case where the twist pitch detected by the detection device 80 is longer than the standard twist pitch, the condition adjuster 120 makes the rotation angle, at which the tip portion 5A of the sheath 5 is rotated, smaller than the standard rotation angle. Such an adjustment modifies the twisting conditions so as to resolve the difference between the twist pitch detected by the detection device 80 (actual twist pitch) and the standard twist pitch.

As shown in Fig. 1, the condition adjuster 120 includes a first detection controller 121, a movement controller 122, a calculator 123, a second detection controller 124, and a corrector 125.

The first detection controller 121 causes the detection device 80 to detect the rotation position of the drain wire 6 at the first detection position P in a state where the tip portion 5A of the sheath 5 is rotated at a predetermined rotation angle smaller than the standard rotation angle (such a predetermined angle is also referred to as a "first rotation angle") and the tip portion 5A is pulled out by such a predetermined distance as to expose the plurality of electric wires 4 and 6 (such a predetermined distance is also referred to as a "first distance) at the first detection position P1 and the second detection position P2. Hereinafter, a state where the tip portion 5A of the sheath 5 is rotated at the first rotation angle and is pulled out by the first distance will also be referred to as a "temporary pause state".

The movement controller 122 controls the rotation device 43 of the holding device 40, based on the rotation position of the drain wire 6 at the first detection position P1 detected under the control of the first detection controller 121, to move the drain wire 6 to a predetermined rotation position. In this embodiment, the predetermined rotation position is the 0 o'clock position. In this embodiment, the movement controller 122 controls the rotation device 43 of the holding device 40 to rotate the multi-core cable 3 until the drain wire 6 is detected by the electrodes 81 of the detection device 80.

The calculator 123 finds an expected rotation position of the drain wire 6 at the second position P2 in the case where the twist pitch is equal to the standard twist pitch, based on the rotation position of the drain wire 6 at the first detection position P1 (in this embodiment, based on the 0 o'clock position). In this embodiment, the calculator 123 finds an expected rotation position of the drain wire 6 after the drain wire 6 is moved by the movement controller 122. Contents of the calculation will be described in detail below together with numerical value examples.

The second detection controller 124 causes the detection device 80 to detect the rotation position of the drain wire 6 at the second detection position P2. The corrector 125 corrects the rotation angle based on the difference between the expected rotation position found the calculator 123 and the detected rotation position of the drain wire 6 at the second detection position P2. A correction method will be described in detail below together with numerical value examples.

The processing device 1 for the multi-core cable 3 according to embodiment 1 has the above-described configuration. Now, a method for untwisting the electric wires 4 and 6 by the processing device 1 will be described.

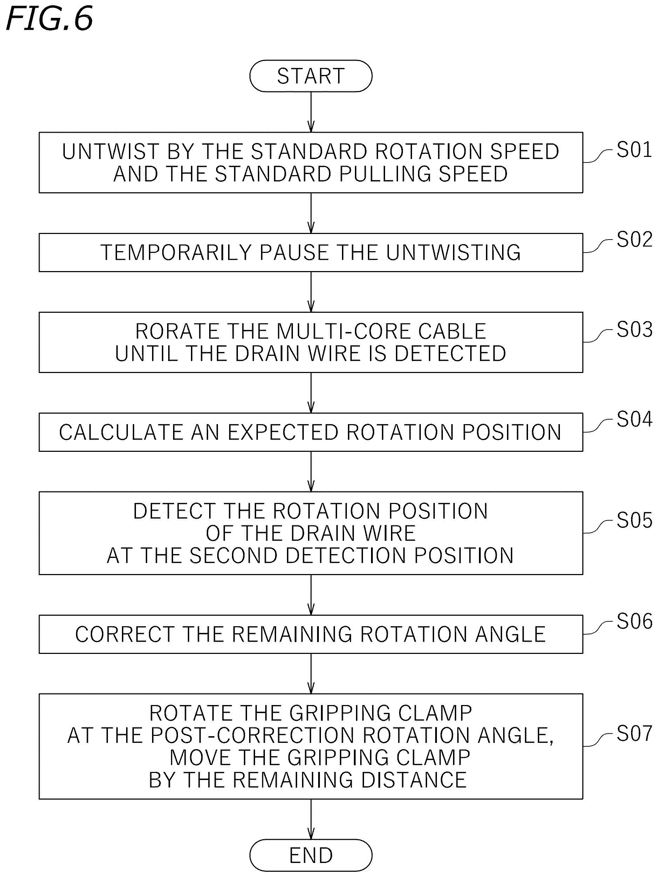

Fig. 6 is a flowchart showing a process of untwisting the electric wires 4 and 6. The process in Fig. 6 starts after the holding device 40 holds the multi-core cable 3 and the gripping device 50 grips the tip portion 5A of the sheath 5. As shown in Fig. 6, in the process of untwisting the electric wires 4 and 6, in step S01, the gripping clamp 56 is rotated at the standard rotation speed and is moved at the standard pulling speed. In step S02, when the gripping clamp 56 is rotated at the first rotation angle and is moved by the first distance, the rotation and the movement of the gripping clamp 56 are stopped. As a result, the multi-core cable 3 is put into the temporary pause state. The temporary pause state in step S02 is achieved as long as the rotation angle of the gripping clamp 56 up to this point is the first rotation angle and the moving distance up to this point is the first distance. Therefore, in step S01, the gripping clamp 56 may be rotated at a speed other than the standard rotation speed, and may be moved at a speed other than the standard pulling speed.

In step S03, the rotation device 43 of the holding device 40 and the rotation device 70 are rotated in synchronization with each other, and the multi-core cable 3 is rotated until the drain wire 6 is detected by the electrodes 81 of the detection device 80. As a result, the drain wire 6 is moved to the 0 o'clock position. It is not necessary that the drain wire 6 is moved until the drain wire 6 is detected by the electrodes 81 for the first time. It is preferred that the drain wire 6 is moved until a central portion in a left-right direction of the drain wire 6 is detected by the electrodes 81. Specifically, the multi-core cable 3 may be rotated until the drain wire 6 is detected by the electrodes 81 for the first time, then may be further rotated until the drain wire 6 is not detected anymore by the electrodes 81, and then may be returned by a half of the rotation angle from the time when the drain wire 6 is detected for the first time until the time when the drain wire 6 is not detected anymore.

In step S04, the expected rotation position of the post-movement drain wire 6 in the case where the twist pitch is equal to the standard twist pitch is found. In step S05, the rotation position of the drain wire 6 at the second detection position P2 after the drain wire 6 is moved in step S03 is detected by the detection device 80. Step S04 and step S05 may be performed in the opposite order, or may be performed concurrently. In step S06, the remaining rotation angle is corrected based on the difference between the expected rotation position found in step S04 and the rotation position of the drain wire 6 detected in step S05. The contents of the operation and the calculation of the untwisting device 30 up to this point will be described by way of numerical value examples, hereinafter.

For example, it is assumed that the standard twist pitch is 20 mm, the distance from the tip to the cut 5C is 40 mm (i.e., the tip portion 5A is pulled out by 40 mm), the distance from the cut 5C to the first detection position P1 in the front-rear direction is substantially zero, the distance from the cut 5C to the second detection position P2 in the front-rear direction is 30 mm, and the first distance is 30 mm. The distance from the cut 5C to the second detection position P2 and the first distance do not need to be equal to each other, but the calculation is easier in the case where these distances are equal to each other. In the case where the twist pitch of the electric wires 4 and 6 is equal to the standard twist pitch, that is, 20 mm, the pull-out distance of 20 mm by which the tip portion 5A is pulled out corresponds to the rotation angle of 360 degrees. Therefore, in the standard untwisting conditions, the rotation angle/pull-out distance is 360 degrees/20 mm. In the case where the gripping clamp 56 is rotated at the standard rotation speed and is moved at the standard pulling speed, the rotation angle/pull-out distance is 360 degrees/20 mm. Therefore, where the rotation position of the drain wire 6 at the first detection position P1 is the 0-degree position, the expected rotation position of the drain wire 6 at the second detection position P2 (in this embodiment, away from the first detection position P1 by 30 mm = 1.5 times the standard twist pitch) is the 540-degree position (the 180-degree position after one rotation; 1.5 times the 360 degrees) (step S04). The rotation amount of the gripping clamp 56 is also 540 degrees at this point.

Now, it is assumed that the rotation position of the drain wire 6 actually detected is the 600-degree position (step S05). From this, the actual twist pitch of the electric wires 4 and 6 is found to be 360 degrees/600 degrees × 300 mm = 18 mm. In this case, the actual twist pitch is smaller than the standard twist pitch. Therefore, if the gripping clamp 56 is rotated at the standard rotation angle, the electric wires 4 and 6 are not completely untwisted. By contrast, in the case where the actual twist pitch is larger than the standard twist pitch, if the gripping clamp 56 is rotated at the standard rotation angle, the electric wires 4 and 6 are excessively untwisted and are twisted in the opposite direction. In the case where the rotation position of the drain wire 6 is shifted from the expected rotation position by 180 degrees or larger, the direction of the shift cannot be distinguished. Therefore, it is preferred that the first distance is not much longer than the standard twist pitch. The first distance is preferably at least 1.5 times and at most 3 times the standard twist pitch.

The rotation angel/pull-out distance for untwisting the multi-core cable 3 as described above completely is 360 degrees/18 mm. When being converted into the pull-out distance of 40 mm, the rotation angel/pull-out distance is 800 degrees/40 mm. Therefore, after the correction (step S06), the gripping clamp 56 is rotated at 260 degrees (800 degrees - 540 degrees) while being moved by the remaining distance of 10 mm (40 mm - 30 mm). According to the standard pulling conditions, the rotation angle/pull-out distance is 720 degrees/40 mm. As can be seen, the gripping clamp 56 is rotated at an angle that is 80 degrees larger.

In step S07, the gripping clamp 56 is rotated at the rotation angle corrected in step S06 while being moved by the remaining distance. With such a process, even in the case where the twist pitch of the electric wires 4 and 6 in the multi-core cable 3 is different from the standard twist pitch, the electric wires 4 and 6 are untwisted properly without being untwisted insufficiently or excessively. Such a method has an advantage that the number of times of the detection of the position of the drain wire 6 and the number of times of position matching are decreased, and therefore, the productivity is improved, over, for example, a modification described below.

The detection device 80 may be configured to detect the rotation position of the drain wire 6 (or the core wires 4) at the first detection position P1 regardless of the rotation position thereof around the rotation axis Ax. In this case, the step of rotating the gripping clamp 56 (in Fig. 6, step S03) in order to move the drain wire 6 (or the core wires 4) to a predetermined rotation position is omitted, and thus the productivity is further improved. In this case, an expected rotation position of the drain wire 6 (or the core wires 4) at the second detection position P2 is calculated from the detected rotation position of the drain wire 6 (or the core wires 4) at the first detection position P1.

Note that with the configuration according to this embodiment, it is sufficient that the detection device 80 is configured to detect that the drain wire 6 is located at the predetermined rotation position (in this embodiment, the 0 o'clock position) at the first detection position P1. It is not necessary that the detection device 80 is configured to detect the rotation position of the drain wire 6 at the first detection position P1 regardless of the rotation position thereof around the rotation axis Ax. Therefore, the configuration of the detection device 80 is simplified. In this embodiment, the adoption of the electrodes 81 simplifies, and decreases the cost of, the detection device 80.

The condition adjuster 120 may maintain the rotation speed of the tip portion 5A of the sheath 5 at the standard rotation speed and maintain the pulling speed at which the pull-out device 60 pulls out the tip portion 5A at the standard pulling speed, even in the case where the twist pitch detected by the detection device 80 is different from the standard twist pitch. In the case where, for example, the twist pitch detected by the detection device 80 is different from the standard twist pitch, the condition adjuster 120 may rotate the gripping clamp 56 only by the calculated correction amount immediately before the tip portion 5A of the sheath 5 is pulled out from the electric wires 4 and 6. Such a control is simpler and decreases the load on the controller 100.

The untwisting device 30 may be configured to re-detect, by the detection device 80, the position of the electric wires 4 and 6, more specifically, the position of a portion of the electric wires 4 and 6 untwisted that is based on an estimation made in step S07. In the case where the result of the re-detection of the position of the electric wires 4 and 6 does not fulfill a predetermined determination criterion, the processing device 1 for the multi-core cable 3 may re-untwist the electric wires 4 and 6 based on the re-detected position of the electric wires 4 and 6 by use of the untwisting device 30 or any other device.

### [Modification of embodiment 1]

The processing device 1 for the multi-core cable 3 according to embodiment 1 may be carried out in other embodiments. Hereinafter, a processing device for a multi-core cable according to a modification of embodiment 1 will be described. In the following description of the modification, elements having substantially the same functions as those in embodiment 1 will bear the same reference signs. Overlapping descriptions will be omitted or simplified as appropriate. This is also applicable to other embodiments described after this modification.

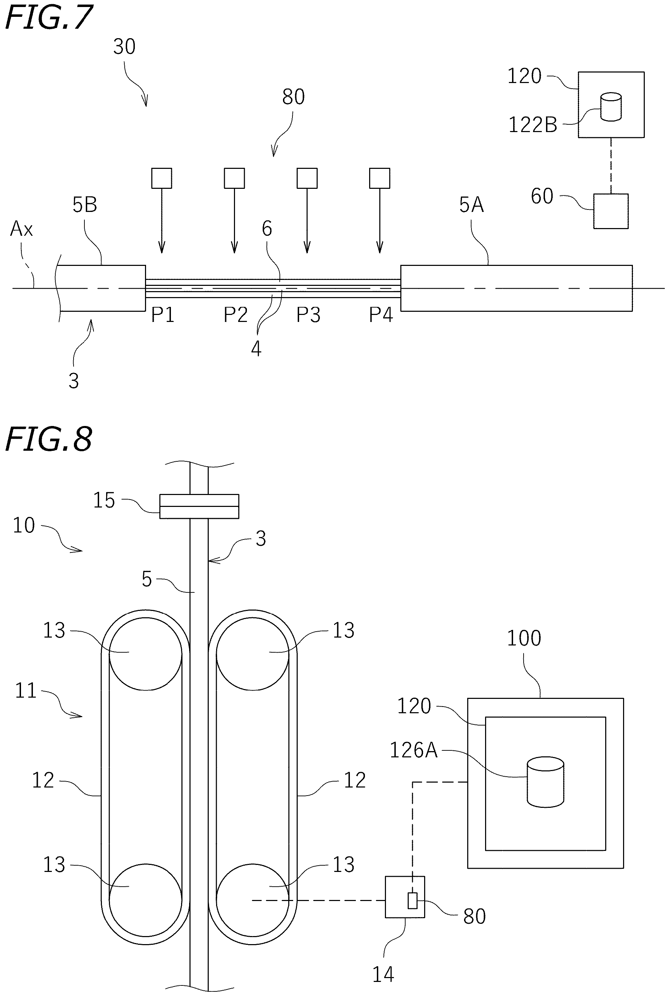

Fig. 7 is a schematic side view of the untwisting device 30 according to this modification, and shows a plurality of detection positions P1 through P4 of the detection device 80. As shown in Fig. 7, in this modification, the detection device 80 is configured to detect the rotation position of the drain wire 6 at the plurality of detection positions P1 through P4 arranged in a line in the rotation axis Ax. The rotation position of the drain wire 6 may be detected at the detection positions P1 through P4 by a plurality of electrodes or a plurality of cameras. Alternatively, if possible, such a detection may be performed by one camera.

In this modification, the condition adjuster 120 includes another movement controller 122B controlling the rotation device 70 in a state where the pull-out device 60 is at a pause, to move the drain wire 6 at each of the detection positions P2 through P4 to the expected rotation position. In this modification, the condition adjuster 120 is configured to, in the case where each time the actual rotation position of the drain wire 6 is found to be shifted from the expected rotation position, rotate the multi-core cable 3 to resolve the shift. In this modification, for example, at the second detection position P2, the pulling out of the tip portion 5A of the sheath 5 is stopped and the multi-core cable 3 is rotated from this state so as to move the drain wire 6 to the expected rotation position. Also at the third detection position P3, the pulling out of the tip portion 5A of the sheath 5 is stopped and the multi-core cable 3 is rotated from this state so as to move the drain wire 6 to the expected rotation position. This is applicable even in the case where the number of the detection positions is different.

With such a configuration also, the electric wires 4 and 6 are untwisted properly without being untwisted insufficiently or excessively even in the case where the twist pitch of the electric wires 4 and 6 in the multi-core cable 3 is different from the standard twist pitch. In addition, in this modification, the amount of the untwisting is corrected at each of stages of the untwisting. Therefore, the electric wires 4 and 6 are untwisted with higher precision than in embodiment 1. The number of the detection positions is not limited to any number as long as being two or greater, and there is no specific limitation on the positions thereof, either.

### [Embodiment 2]

In embodiment 2, the twist pitch of the electric wires 4 and 6 is directly measured by the detection device 80. In this embodiment, the detection device 80 is provided in the length measurement device 10, and measures the twist pitch of the electric wires 4 and 6 in a state where the tip portion 5A of the sheath 5 is not pulled out.

Fig. 8 is a schematic plan view of the length measurement device 10. As shown in Fig. 8, the length measurement device 10 includes a transportation device 11 and a cutting device 15. The transportation device 11 transports the multi-core cable 3 by a predetermined length at each time of the transportation. The cutting device 15 cuts the multi-core cable 3 transported by the transportation device 11 into the predetermined length. The cutting device 15 cuts the multi-core cable 3 at the same position each time the multi-core cable 3 transported by the transportation device 11 by the predetermined length stops. As shown in Fig. 8, the transportation device 11 includes left and right transportation belts 12 facing each other, a pair of pulleys 13, which are provided for each of the transportation belts 12 and along which the transportation belt 12 is wound, and a transportation motor 14. The transportation belts 12 are each an endless belt. The transportation motor 14 is connected with, and rotates, at least one of the four pulleys 13. The multi-core cable 3 is transported by being sandwiched between the left and right transportation belts 12, which circulates, while having the remaining twist thereof corrected.

The detection device 80 is configured to measure a rotation torque of the transportation motor 14. The condition adjuster 120 includes a pitch estimator 126A estimating the twist pitch of the plurality of electric wires 4 and 6 based on a fluctuation cycle of the rotation torque measured by the detection device 80. As shown in Fig. 3, the plurality of electric wires 4 and 6 in the sheath 5 are twisted and as a result, surfaces thereof have a cyclic concaved and convexed portions corresponding to the twist pitch. The detection device 80 estimates the twist pitch of the plurality of electric wires 4 and 6 based on the fluctuation cycle of the rotation torque of the transportation motor 14 caused by the concaved and convexed portions.

In this embodiment, the actual twist pitch is found before the untwisting. Therefore, in the case where the twist pitch detected by the detection device 80 is shorter than the standard twist pitch, the condition adjuster 120 makes the rotation angle, at which the tip portion 5A of the sheath 5 is rotated, larger than the standard twist pitch. In the case where the twist pitch detected by the detection device 80 is longer than the standard twist pitch, the condition adjuster 120 makes the rotation angle, at which the tip portion 5A of the sheath 5 is rotated, smaller than the standard twist pitch. The condition adjuster 120, for example, increases or decreases the total rotation angle while maintaining the rotation speed of the gripping clamp 56, and corrects the pulling speed such that the tip portion 5A of the sheath 5 is pulled out from the electric wires 4 and 6 when being rotated at the total rotation angle. Note that the method for correcting the untwisting conditions is not limited to the above-described method.

With the processing device 1 for the multi-core cable 3 according to this embodiment, the actual twist pitch of the electric wires 4 and 6 is estimated without temporarily pausing the untwisting step as is needed in embodiment 1. In addition, the twist pitch of the electric wires 4 and 6 is measured in parallel with the length measurement step of cutting the multi-core cable 3 into a predetermined length. Therefore, the productivity of the processing of the multi-core cable 3 is improved.

### [Modification 1 of embodiment 2]

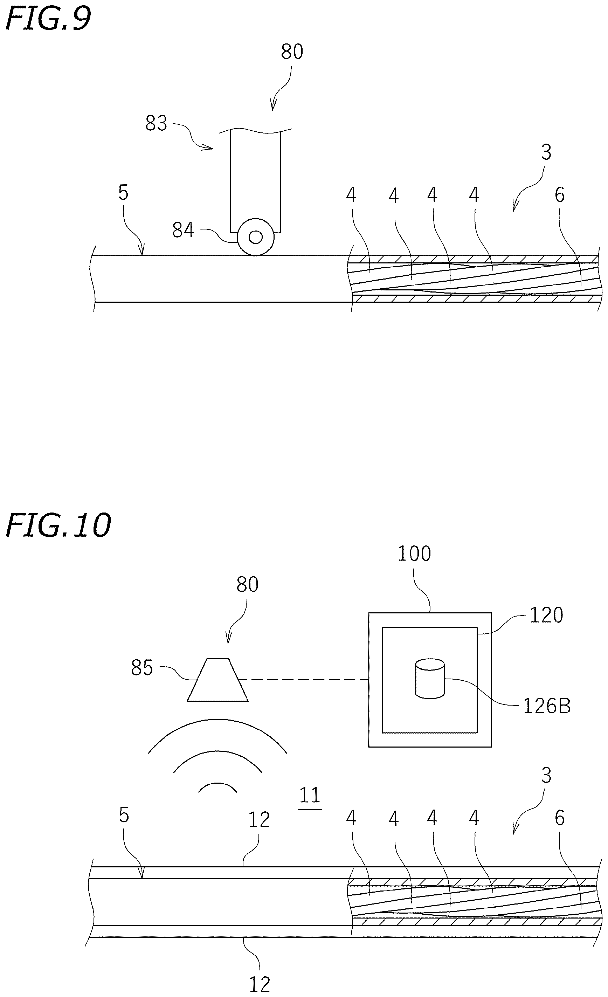

In one modification of embodiment 2, the detection device 80 includes a probe 83 contacting the sheath 5 to be displaced, and finds the twist pitch of the plurality of electric wires 4 and 6 covered with the sheath 5 based on a fluctuation cycle of the displacement of the probe 83. Fig. 9 is a schematic side view of the detection device 80 according to this modification. The probe 83 of the detection device 80 according to this modification is configured to move up and down by being pressed by an object in contact with a bottom end of the probe 83. A roller 84 is provided at the bottom end of the probe 83. The detection device 80 is configured to measure the cyclic concaved and convexed portions of the electric wires 4 and 6 by use of the probe 83 to find the twist pitch of the plurality of electric wires 4 and 6. With the processing device 1 for the multi-core cable 3 according to this modification also, the actual twist pitch of the electric wires 4 and 6 is estimated without temporarily pausing the untwisting step. The probe 83 may contact the sheath 5 of the multi-core cable 3 transported by the transportation device 11 to measure the twist pitch of the electric wires 4 and 6, or may contact the sheath 5 of the multi-core cable 3 at another site to measure the twist pitch of the electric wires 4 and 6. For example, the probe 83 may be provided in the untwisting device 30.

The twist pitch of the plurality of electric wires 4 and 6 covered with the sheath 5 may possibly be measured by a contactless displacement meter, instead of a contact-type displacement meter including the probe 83. However, the sheath 5 conforms to the concaved and convexed portions of the electric wires 4 and 6 by an outer surface of the sheath 5 being pressed by the probe 83. Therefore, the contact-type displacement meter including the probe 83 estimates the twist pitch of the electric wires 4 and 6 more easily.

### [Modification of embodiment 2]

In another modification of embodiment 2, the detection device 80 is configured to acquire a transportation sound of the multi-core cable 3 made by the transportation device 11. Fig. 10 is a schematic plan view of the detection device 80 and the transportation device 11 according to this modification. As shown in Fig. 10, the detection device 80 includes a noise pickup microphone 85. The condition adjuster 120 includes a pitch estimator 126B estimating the twist pitch of the plurality of electric wires 4 and 6 based on a fluctuation cycle of the transportation sound acquired by the detection device 80. The processing device 1 is configured to measure the cyclic fluctuation of the transportation sound made by the cyclic concaved and convexed portions of the electric wires 4 and 6 to estimate the twist pitch of the plurality of electric wires 4 and 6. With the processing device 1 for the multi-core cable 3 according to this modification also, the actual twist pitch of the electric wires 4 and 6 is estimated without temporarily pausing the untwisting step. In addition, the twist pitch of the electric wires 4 and 6 is measured in parallel with the length measurement step.

### [Modification 3 of embodiment 2]

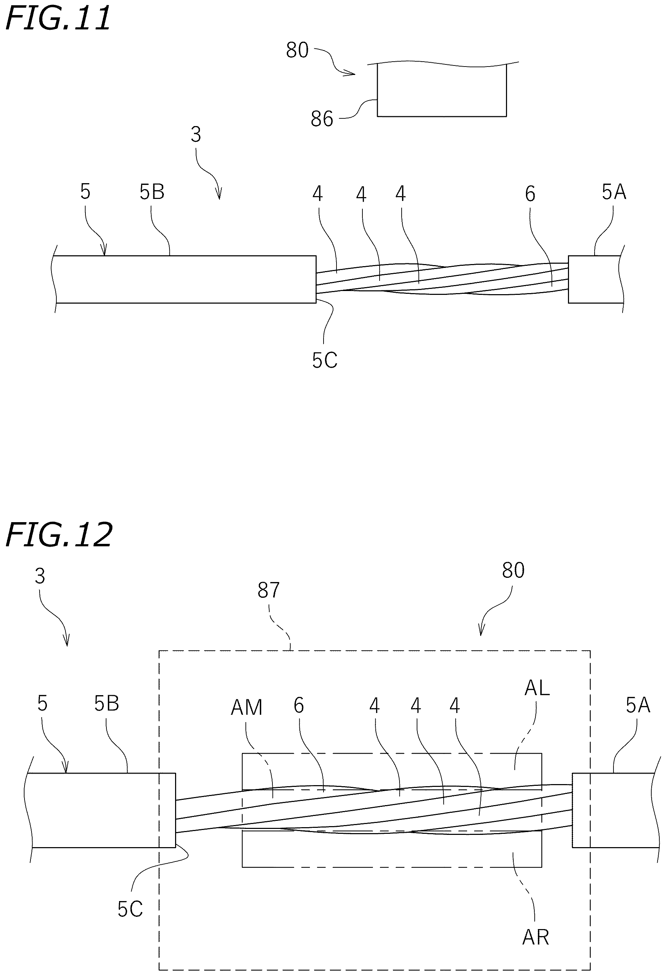

The twist pitch of the electric wires 4 and 6 may be found in a state where the electric wires 4 and 6 are exposed from the sheath 5. Fig. 11 is a schematic side view of the detection device 80 according to modification 3 of embodiment 2. As shown in Fig. 11, in this modification, the detection device 80 includes a contactless displacement meter 86 capable of measuring a distance from the plurality of electric wires 4 and 6 exposed from the sheath 5. The contactless displacement meter 86 is, for example, a laser displacement meter. The detection device 80 is configured to find the twist pitch of the plurality of electric wires 4 and 6 based on a fluctuation cycle of the distance from the plurality of electric wires 4 and 6 measured by the contactless displacement meter 86. The contactless displacement meter 86, for example, measures the height of the electric wires 4 and 6 at many points arranged in the longitudinal direction of the multi-core cable 3 and sets the pitch of peaks or troughs in the height as the twist pitch of the electric wires 4 and 6. The measured pitch of the peaks or the troughs may be, for example, averaged. The contactless displacement meter 86 does not need to be located above the multi-core cable 3. It is sufficient that the contactless displacement meter 86 is located at any position around the axis of the multi-core cable 3 and is configured to measure the distance from the electric wires 4 and 6.

According to this configuration, when the twist pitch is measured, the electric wires 4 and 6 are exposed from the sheath 5. Therefore, the twist pitch of the electric wires 4 and 6 is measured more accurately. In this modification, the electric wires 4 and 6 are exposed from the sheath 5, but the detection device 80 does not contact the exposed electric wires 4 and 6. Therefore, the measurement of the twist pitch does not influence the state of the electric wires 4 and 6.

### [Modification 4 of embodiment 2]

Fig. 12 is a schematic plan view of the detection device 80 according to modification 4 of embodiment 2. As shown in Fig. 12, in this modification, the detection device 80 includes a camera 87 capturing an image of the plurality of electric wires 4 and 6 exposed from the sheath 5. The detection device 80 is configured to find the twist pitch of the plurality of electric wires 4 and 6 based on the image captured by the camera 87.

There is no specific limitation on the method for finding the twist pitch of the plurality of electric wires 4 and 6 based on the image. For example, as shown in Fig. 12, the detection device 80 may detect, based on the image, whether the drain wire 6 is in area AL to the left of the axis of the multi-core cable 3, in area AM on the axis, or in area AR to the right of the axis. Areas AL, AM and AR are appropriately set, and presence/absence of the drain wire 6 in areas AL, AM and AR is determined. Areas AL, AM and AR are each preferably set to be a flat area that is long in the axial direction of the multi-core cable 3. A plurality of each of areas AL, AM and AR may be arranged in the axial direction of the multi-core cable 3. For example, an interval between the point in right area AR at which the drain wire 6 is detected and a point in left area AL at which the drain wire 6 is detected is determined as a half of the twist pitch of the electric wires 4 and 6.

With such a configuration also, the electric wires 4 and 6 are exposed from the sheath 5 when the twist pitch is measured. Therefore, the twist pitch of the electric wires 4 and 6 is measured more accurately. The measurement of the twist pitch does not influence the state of the electric wires 4 and 6 in this embodiment, either. In embodiment 1, the detection of the drain wire 6 by the camera 82 is performed after the electric wires 4 and 6 are untwisted to some extent. In this modification, the detection of the drain wire 6 by the camera 87 is a portion of the twist pitch measurement performed before the electric wires 4 and 6 are untwisted.

### [Modification 5 of embodiment 2]

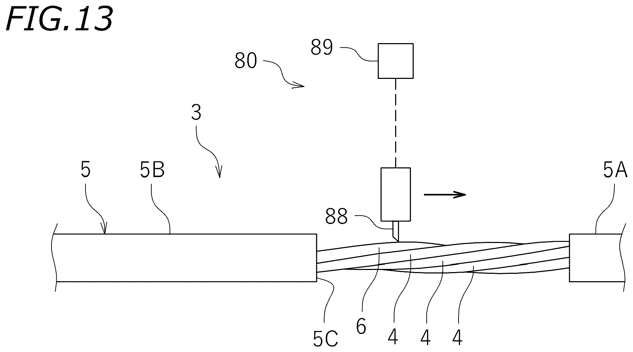

Fig. 13 is a schematic side view of the detection device 80 according to modification 5 of embodiment 2. In this modification, the detection device 80 includes an electrode 88 contacting the drain wire 6 exposed from the sheath 5 to detect the drain wire 6, and a moving device 89 moving the electrode 88 in the longitudinal direction (axial direction) of the multi-core cable 3. The electrode 88 contacts the drain wire 6 having the metal strands thereof exposed and causes an electric current to flow in the drain wire 6 to detect the drain wire 6. The electrode 88 detects the drain wire 6 a plurality of times while being moved in the longitudinal direction of the multi-core cable 3 by the moving device 89. The detection device 80 is configured to find the twist pitch of the plurality of electric wires 4 and 6 based on the interval, in the longitudinal direction of the multi-core cable 3, between the positions at which the drain wire 6 is detected by the electrode 88. The multi-core cable 3 may be moved in the axial direction of the multi-core cable 3, instead of the electrode 88.

With such a configuration, the detection device 80 is configured at lower cost by use of the electrode 88 than by use of, for example, the contactless displacement meter 86 or the camera 87.

### [Embodiment 3]

In embodiment 3, the detection device 80 detects the twist strength of the plurality of electric wires 4 and 6, and the processing device 1 for the multi-core cable 3 corrects the variance in the twist strength of the electric wires 4 and 6. There may be a variance in the twist strength of the electric wires 4 and 6 of the multi-core cable 3, and the untwisting may not be performed well, also due to the variance in the twist strength. In this embodiment, the detection device 80 is configured to measure a rotation torque generated when the rotation device 70 rotates the tip portion 5A of the sheath 5. In the first registration unit 111, a standard rotation torque generated when the rotation device 70 rotates the tip portion 5A of the sheath 5 is registered as a standard twist strength. The "standard rotation torque" may be, for example, a rotation torque of the rotation device 70 measured when the multi-core cable 3 selected with no specific intention is untwisted under the conditions of the standard rotation speed and the standard pulling speed. In this embodiment, the "standard untwisting conditions" are untwisting conditions corresponding to the standard twist strength.

In this embodiment, the gripping device 50 is configured so as to be capable of adjusting a gripping force at which the gripping clamp 56 grips the tip portion 5A of the sheath 5. The gripping device 50 includes, for example, a pressure change mechanism capable of changing a pressure of air to be supplied to the actuator 55 (air cylinder). Alternatively, the gripping device 50 may include a motor capable of controlling a torque thereof as the actuator 55. In this embodiment, in the second registration unit 112, a standard gripping force at which the gripping clamp 56 is caused to grip the tip portion 5A of the sheath 5 by the gripping device 50 is registered as one of the standard untwisting conditions.

In the case where the twist strength detected by the detection device 80 is stronger than the standard twist strength, the condition adjuster 120 according to this embodiment makes the rotation speed of the tip portion 5A of the sheath 5 slower than the standard rotation speed, and makes the speed, at which the pull-out device 60 pulls out the tip portion 5A of the sheath 5, slower than the standard pulling speed. In the case where the twist strength detected by the detection device 80 is weaker than the standard twist strength, the condition adjuster 120 makes the rotation speed of the tip portion 5A of the sheath 5 faster than the standard rotation speed, and makes the speed, at which the pull-out device 60 pulls out the tip portion 5A of the sheath 5, faster than the standard pulling speed.

With such a control, when the twist strength of the electric wires 4 and 6 is strong, the electric wires 4 and 6 are untwisted more slowly than under the standard untwisting conditions. This causes a sufficient length of time to be taken to correct the remaining twist. Therefore, the remaining twist of the electric wires 4 and 6 is corrected even if being strong. When the twist of the electric wires 4 and 6 is weak, the electric wires 4 and 6 are untwisted more faster than under the standard untwisting conditions. This improves the productivity. In the case where the twist of the electric wires 4 and 6 is weaker than the standard twist strength, the untwisting may be performed at the standard rotation speed and the standard pulling speed.

In the case where the twist strength detected by the detection device 80 is stronger than the standard twist strength, the condition adjuster 120 according to this embodiment makes the pulling force, at which the pull-out device 60 pulls out the tip portion 5A of the sheath 5, larger than the standard pulling force. In the case where the twist strength detected by the detection device 80 is weaker than the standard twist strength, the condition adjuster 120 makes the pulling force, at which the pull-out device 60 pulls out the tip portion 5A of the sheath 5, smaller than the standard pulling force.

With such a control, when the twist of the electric wires 4 and 6 is strong, the electric wires 4 and 6 are pulled more strongly than under the standard untwisting conditions. This extends the electric wires 4 and 6 more strongly. Therefore, the remaining twist of the electric wires 4 and 6 is corrected even if being strong. When the twist of the electric wires 4 and 6 is weak, the electric wires 4 and 6 are pulled more weakly than under the standard untwisting conditions. This suppresses application of unnecessary tension on the electric wires 4 and 6. In the case where the twist of the electric wires 4 and 6 is weaker than the standard twist strength, the untwisting may be performed at the standard pulling strength.

In the case where the twist strength detected by the detection device 80 is stronger than the standard twist strength, the condition adjuster 120 according to this embodiment makes the gripping force, at which the gripping clamp 56 is caused to grip the tip portion 5A of the sheath 5 by the gripping device 50, larger than the standard gripping force. In the case where the twist strength detected by the detection device 80 is weaker than the standard twist strength, the condition adjuster 120 makes the gripping force, at which the gripping clamp 56 is caused to grip the tip portion 5A of the sheath 5 by the gripping device 50, smaller than the standard pulling force.

With such a control, when the twist of the electric wires 4 and 6 is strong, the tip portion 5A of the sheath 5 and also the electric wires 4 and 6 in the tip portion 5A are gripped more strongly than under the standard untwisting conditions. This extends the electric wires 4 and 6 strongly when the tip portion 5A is pulled out. In addition, the gripping force is made strong, so that the rotation force of the gripping clamp 56 is transmitted to the electric wires 4 and 6 with little waste (in a state where the gripping clamp 56 and the electric wires 4 and 6 do not much slip with respect to each other). Therefore, the remaining twist of the electric wires 4 and 6 is corrected even if being strong. When the twist of the electric wires 4 and 6 is weak, the electric wires 4 and 6 are gripped more weakly than under the standard untwisting conditions. This suppresses application of an unnecessary gripping force on the electric wires 4 and 6. In the case where the twist of the electric wires 4 and 6 is weaker than the standard twist strength, the tip portion 5A of the sheath 5 may be gripped by the standard gripping force.

In this embodiment, the rotation speed, the pulling speed, the pulling force and the gripping force of the tip portion 5A of the sheath 5 are adjusted in accordance with the twist strength of the electric wires 4 and 6. However, only a portion of these may be adjusted. Preferably, at least the rotation speed and the pulling speed of the tip portion 5A of the sheath 5 may be adjusted in accordance with the twist strength of the electric wires 4 and 6. Neither the pulling force nor the gripping force of the tip portion 5A needs to be adjusted.

### [Modification of embodiment 3]

In a modification of embodiment 3, in the case where the detected twist strength of the electric wires 4 and 6 is stronger than the standard twist strength, the untwisting device 30 untwists the electric wires 4 and 6 more than under the standard untwisting conditions, and then re-twists the electric wires 4 and 6. In this embodiment, in the second registration unit 112, the standard rotation angle at which the rotation device 70 rotates the tip portion 5A of the sheath 5, and a standard rotation direction in which the rotation device 70 rotates the tip portion 5A of the sheath 5, are registered. In the case where the twist strength detected by the detection device 80 is stronger than the standard twist strength, the condition adjuster 120 makes the rotation angle, at which the tip portion 5A of the sheath 5 is rotated in the standard rotation direction, larger than the standard rotation angle. In addition, the condition adjuster 120 is configured to, after the rotation of the tip portion 5A in the standard rotation direction is finished, rotate the tip portion 5A in an opposite direction to the standard rotation direction at the same rotation angle as the rotation angle enlarged regarding the standard rotation direction.

With such a control, when the twist the electric wires 4 and 6 is strong, the electric wires 4 and 6 are untwisted by a larger amount than under the standard untwisting conditions. Therefore, the remaining twist of the electric wires 4 and 6 is corrected strongly even if being strong. Merely with this process, the electric wires 4 and 6 are twisted in the opposite direction due to the excessive untwisting. Therefore, the untwisting device 30 is configured to re-twist (twist in the opposite direction) the electric wires 4 and 6 at the angle at which the electric wires 4 and 6 has been untwisted excessively. The control in this modification may be added to the control in embodiment 3.

### [Combination of embodiments]

In general, when the twist strength of the electric wires 4 and 6 is strong, the twist pitch is short, whereas when the twist strength of the electric wires 4 and 6 is weak, the twist pitch is long. Therefore, in the case where the twist strength of the electric wires 4 and 6 is stronger than the standard twist strength, the rotation angle of the tip portion 5A of the sheath 5 may be made larger than the standard rotation angle to perform untwisting by a larger amount. In the case where the twist strength of the electric wires 4 and 6 is weaker than the standard twist strength, the rotation angle of the tip portion 5A of the sheath 5 may be made smaller than the standard rotation angle to perform untwisting by a smaller amount. As the adjustment on the untwisting conditions based on the detected twist strength, only the adjustment on the rotation angle of the tip portion 5A of the sheath 5 (corresponding to embodiment 1, embodiment 2, the modifications thereof, and the modification of embodiment 3 among the above-described embodiments) may be performed, only the adjustment on the rotation speed, the pulling speed, the pulling force or the gripping force (corresponding to embodiment 3) of the tip portion 5A may be performed, or both of the adjustments may be performed.

Alternatively, as the adjustment on the untwisting conditions based on the detected twist pitch of the electric wires 4 and 6, only the adjustment on the rotation speed, the pulling speed, the pulling force or the gripping force of the tip portion 5A of the sheath 5 may be performed, or the adjustment on the rotation angle of the tip portion 5A of the sheath 5 may be performed in addition thereto. Both of, or either one of, the detection of the twist pitch and the detection of the twist strength of the electric wires 4 and 6 may be performed. Embodiment 1, embodiment 2 or any of the modifications thereof may be combined with embodiment 3 or the modification thereof. These embodiments and modifications may be combined in any way as long as being carried out concurrently.

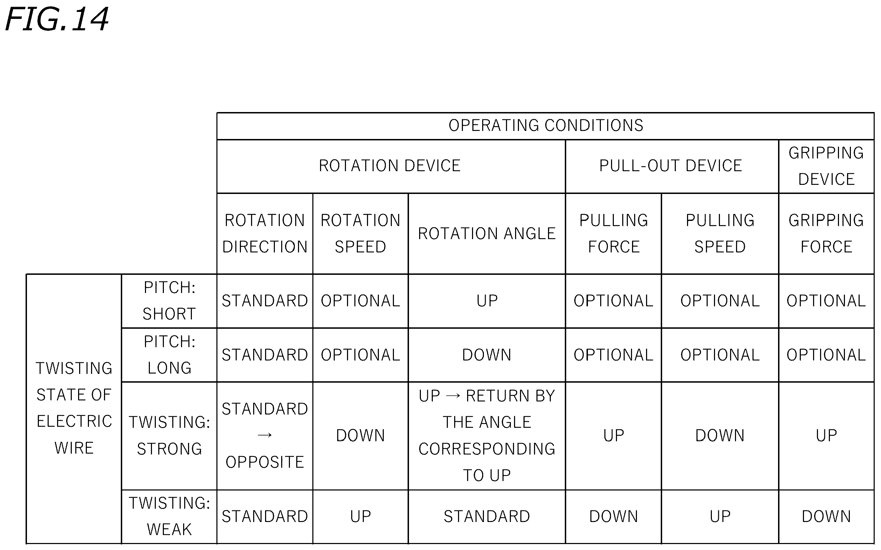

Fig. 14 shows a table showing methods for adjusting the untwisting conditions in embodiment 1 through the modification of embodiment 3. Fig. 14 shows the case where the detected twist pitch is shorter than the standard twist pitch, the case where the detected twist pitch is longer than the standard twist pitch, the case where the detected twist strength is stronger than the standard twist strength, and the case where the detected twist strength is weaker than the standard twist strength in a distinguished manner. The case where the detected twist pitch is shorter than the standard twist pitch, and the case where the detected twist strength is stronger than the standard twist strength, may be replaced with each other or may be combined together. The case where the detected twist pitch is longer than the standard twist pitch, and the case where the detected twist strength is weaker than the standard twist strength, may be replaced with each other or may be combined together.

### [Other embodiments]

Some preferred embodiments of the present invention are described above. The above-described embodiments are merely illustrative, and the present invention may be carried out in any of other embodiments. Unless otherwise specified, the embodiments do not limit the present invention.

For example, there is no specific limitation on the method for rotating the portion 5A of the sheath 5. There is no specific limitation on the configuration of rotating the tip portion 5A. For example, the gripping clamp 56 may include a pair of, more specifically, top and bottom, clamp members and may be configured such that the clamp members move in opposite directions in the left-right direction while sandwiching the tip portion 5A. In this case, the tip portion 5A is rotated by being rolled by the pair of, more specifically, top and bottom, clamp members.

In the above-described embodiments, the tip portion 5A is rotated while the non-tip portion 5B of the sheath 5 is kept still. It is sufficient that the tip portion 5A of the sheath 5 is rotated with respect to the non-tip portion 5B. There is no specific limitation on the configuration or the operation of the rotation device. The non-tip portion 5B of the sheath 5 may be rotated whereas the tip portion 5A may be kept still. The tip portion 5A and the non-tip portion 5B may be rotated in opposite directions to each other.

There is no specific limitation on the configuration of the gripping clamp 56. The gripping clamp 56 may include any configuration capable of gripping the tip portion 5A of the sheath 5. For example, the gripping clamp 56 may include a pair of platelike members gripping the tip portion 5A of the sheath 5, instead of the first clamp claw 51 and the second clamp claw 52.

The gripping clamp 56 of the gripping device 50 may be configured to grip the plurality of exposed electric wires 4 and 6, instead of the tip portion 5A of the sheath 5, at the time of untwisting. In this case also, the rotation device 70 is configured to rotate the holding clamp 41 and the gripping clamp 56 with respect to each other.

In the above-described embodiments, the multi-core cable 3 includes four core wires 4 and one drain wire 6. There is no specific limitation on the number of the core wires 4 or the drain wire(s) 6. The drain wire 6 does not need to be included. The multi-core cable 3 may include a plurality of covered electric wires, and does not need to include non-covered electric wires. The multi-core cable 3 may include non-covered electric wires and does not need to include covered electric wires.

In the above-described embodiments, the pull-out device 60 is configured to move the gripping clamp 56 to pull out the tip portion 5A of the sheath 5. Alternatively, the pull-out device 60 may be configured to move the gripping clamp 41 away from the gripping clamp 56 to pull out the tip portion 5A. The pull-out device 60 may be configured to move both of the gripping clamp 56 and the holding clamp 41 such that the gripping clamp 56 moves away from the holding clamp 41, to pull out the tip portion 5A. In the case where the gripping clamp 56 has a configuration of untwisting the plurality of electric wires 4 and 6 while directly gripping the electric wires 4 and 6, the pull-out device 60 may include, for example, another clamp configured to pull out the tip portion 5A of the sheath 5 and may be configured to move at least one of the another clamp and the holding clamp 41 to pull out the tip portion 5A of the sheath 5.

In embodiment 1 described above, the electric wires 4 and 6 are partially untwisted before the drain wire 6 is detected. The electric wires 4 and 6 do not need to be untwisted before the drain wire 6 is detected. In this case, the electric wires 4 and 6 are not untwisted, the tip portion 5A of the sheath 5 is pulled out to some extent, and the rotation positions of the drain wire 6 are measured at the first detection position P1 and the second detection position P2. In the modification of embodiment 1 also, such a control may possibly be repeated intermittently.

The configuration of the untwisting device 30 in the above-described embodiments is merely an example. Any device capable of executing the above-described control may be used as the untwisting device. This is also applicable to the length measurement device 10 and the cutting device 20.

In the case where the detected twist pitch of the electric wires 4 and 6 is shorter than the standard twist pitch or in the case where the detected twist strength of the electric wires 4 and 6 is stronger than the standard twist strength, the processing device 1 for the multi-core cable 3 may include a correction device further correcting the electric wires 4 and 6 after the untwisting. The correction device may be, for example, a device stroking the electric wires 4 and 6 while sandwiching the electric wires 4 and 6 with a plurality of rollers, a device pulling the electric wires 4 and 6 while gripping the electric wires 4 and 6, or the like.

### Reference Signs List

- 1: processing device
- 3: multi-core cable
- 4: core wire (electric wire)
- 5: sheath
- 5A: tip portion
- 5B: non-tip portion
- 6: drain wire (specific electric wire)
- 10: length measurement device
- 11: transportation device
- 14: transportation motor
- 15: cutting device
- 30: untwisting device
- 40: holding device
- 41: holding clamp (holding member)
- 43: rotation device (base-side rotation device)
- 50: gripping device
- 56: gripping clamp (gripping member)
- 60: pull-out device
- 70: rotation device
- 80: detection device
- 83: probe
- 85: noise pickup microphone
- 86: contactless displacement meter
- 87: camera (image capturing device)
- 88: electrode
- 100: controller
- 111: first registration unit
- 112: second registration unit
- 120: condition adjuster
- 121: first detection controller
- 122: movement controller
- 122B: movement controller (another movement controller)
- 123: calculator
- 124: second detection controller
- 125: corrector
- 126A: pitch estimator
- 126B: pitch estimator

## Claims

1. A processing device for a multi-core cable, the processing device processing the multi-core cable including a plurality of twisted electric wires and a sheath covering the plurality of electric wires, the processing device comprising:
a holding member configured to hold a non-tip portion of the sheath having a cut made between a tip portion and the non-tip portion;
a gripping device including a gripping member configured to grip the tip portion of the sheath or the plurality of electric wires exposed;
a pull-out device configured to pull out the tip portion of the sheath;
a rotation device configured to rotate the holding member and the gripping member with respect to each other;
a detection device configured to detect at least one of a twist pitch and a twist strength of the plurality of electric wires; and
a controller configured to control the gripping device, the pull-out device and the rotation device,
wherein the controller includes a condition adjuster configured to adjust at least one of operating conditions of the gripping device, the pull-out device and the rotation device based on the detection performed by the detection device.

2. The processing device for the multi-core cable according to claim 1, wherein the condition adjuster adjusts at least one of a rotation angle and a rotation speed at which the rotation device rotates the holding member and the gripping member with respect to each other, a pulling speed and a pulling force at which the pull-out device pulls out the tip portion of the sheath, and a gripping force of the gripping device.

3. The processing device for the multi-core cable according to claim 2, wherein:
the controller includes a first registration unit in which at least one of a standard twist pitch and a standard twist strength of the plurality of electric wires is registered, and
the condition adjuster adjusts at least one of the rotation angle and the rotation speed of the rotation device, the pulling speed and the pulling force of the pull-out device, and the gripping force of the gripping device based on at least one of a comparison between the twist pitch of the plurality of electric wires detected by the detection device and the standard twist pitch and a comparison between the twist strength of the plurality of electric wires detected by the detection device and the standard twist strength.

4. The processing device for the multi-core cable according to any one of claims 1 through 3, wherein:
the controller includes:
a first registration unit in which a standard twist pitch of the plurality of electric wires is registered, and
a second registration unit in which a standard rotation angle at which the rotation device rotates the holding member and the gripping member with respect to each other is registered,
the detection device is configured to detect the twist pitch of the plurality of electric wires, and
in a case where the detected twist pitch is shorter than the standard twist pitch, the condition adjuster makes a rotation angle of the rotation device larger than the standard rotation angle, and in a case where the detected twist pitch is longer than the standard twist pitch, the condition adjuster makes the rotation angle of the rotation device smaller than the standard rotation angle.

5. The processing device for the multi-core cable according to claim 4, wherein:
the rotation device is configured to rotate the holding member and the gripping member with respect to each other around a predetermined rotation axis,
the detection device is configured to detect a rotation position of a specific electric wire among the plurality of electric wires at least at a first detection position on the rotation axis and a second detection position on a tip side with respect to the first detection position, and
the condition adjuster includes:
a first detection controller configured to cause the detection device to detect the rotation position of the specific electric wire at the first detection position in a state where the tip portion of the sheath is pulled out by a first distance by which the plurality of electric wires are exposed at the first detection position and the second detection position,
a calculator configured to find an expected rotation position of the specific electric wire at the second detection position in a case where the twist pitch is equal to a standard twist pitch, based on the rotation position of the specific electric wire at the first detection position,
a second detection controller configured to cause the detection device to detect the rotation position of the specific electric wire at the second detection position, and
a corrector configured to correct a rotation angle of the rotation device based on a difference between the expected rotation position found by the calculator and the detected rotation position of the specific electric wire at the second detection position.

6. The processing device for the multi-core cable according to claim 5, further including a base-side rotation device configured to rotate the multi-core cable around a rotation axis matching the rotation axis of the rotation device, wherein:
the condition adjuster includes a movement controller configured to control the base-side rotation device based on the rotation position, of the specific electric wire at the first detection position, detected under the control of the first detection controller, to move the specific electric wire to a predetermined rotation position, and
the calculator finds an expected rotation position of the specific electric wire after the specific electric wire is moved by the movement controller.

7. The processing device for the multi-core cable according to claim 5, wherein the condition adjuster includes another movement controller configured to control the rotation device to move the specific electric wire at the second detection position to the expected rotation position.

8. The processing device for the multi-core cable according to claim 4, wherein the detection device includes a probe contacting the sheath to be displaced, and is configured to find the twist pitch of the plurality of electric wires covered with the sheath, based on a fluctuation cycle of the displacement of the probe.

9. The processing device for the multi-core cable according to claim 4, wherein the detection device includes a contactless displacement meter capable of measuring a distance from the plurality of electric wires exposed from the sheath, and is configured to find the twist pitch of the plurality of electric wires based on a fluctuation cycle of the distance from the plurality of electric wires measured by the contactless displacement meter.

10. The processing device for the multi-core cable according to claim 4, wherein:
one of the plurality of electric wires is a drain wire having exposed metal strands, and
the detection device includes an electrode contacting the drain wire exposed from the sheath to detect the drain wire, and is configured to find the twist pitch of the plurality of electric wires based on an interval, in a longitudinal direction of the multi-core cable, between positions at which the electrode detects the drain wire.

11. The processing device for the multi-core cable according to claim 4, wherein the detection device includes an image capturing device configured to acquire an image of the plurality of electric wires exposed from the sheath, and is configured to find the twist pitch of the plurality of electric wires based on the image acquired by the image capturing device.

12. The processing device for the multi-core cable according to claim 4, further including a length measurement device including a transportation device configured to transport the multi-core cable by a predetermined length at each time of the transportation, and a cutting device configured to cut the multi-core cable transported by the transportation device into the predetermined length, wherein:
the transportation device includes a transportation motor,
the detection device is configured to measure a rotation torque of the transportation motor, and
the condition adjuster includes a pitch estimator configured to estimate the twist pitch of the plurality of electric wires based on a fluctuation cycle of the rotation torque measured by the detection device.

13. The processing device for the multi-core cable according to claim 4, further including a length measurement device including a transportation device configured to transport the multi-core cable by a predetermined length at each time of the transportation and a cutting device configured to cut the multi-core cable transported by the transportation device into the predetermined length, wherein:
the detection device is configured to acquire a transportation sound of the multi-core cable made by the transportation device, and
the condition adjuster includes a pitch estimator configured to estimate the twist pitch of the plurality of electric wires based on a fluctuation cycle of the transportation sound acquired by the detection device.

14. The processing device for the multi-core cable according to any one of claims 1 through 13, wherein:
the pull-out device is configured to move at least one of the gripping member and the holding member such that the gripping member moves away from the holding member, to pull out the tip portion of the sheath,
the controller includes:
a first registration unit in which a standard twist strength of the plurality of electric wires is registered, and
a second registration unit in which a standard rotation speed at which the rotation device rotates the holding member and the gripping member with respect to each other, and a standard pulling speed at which the pull-out device pulls out the tip portion of the sheath, are registered,
the detection device is configured to detect the twist strength of the plurality of electric wires, and
in a case where the detected twist strength is stronger than the standard twist strength, the condition adjuster makes a rotation speed of the rotation device slower than the standard rotation speed, and makes a pulling speed of the pull-out device slower than the standard pulling speed.

15. The processing device for the multi-core cable according to any one of claims 1 through 14, wherein:
the pull-out device is configured to move at least one of the gripping member and the holding member such that the gripping member moves away from the holding member, to pull out the tip portion of the sheath,
the controller includes:
a first registration unit in which a standard twist strength of the plurality of electric wires is registered, and
a second registration unit in which a standard pulling force at which the pull-out device pulls out the tip portion of the sheath is registered,
the detection device is configured to detect the twist strength of the plurality of electric wires, and
in a case where the detected twist strength is stronger than the standard twist strength, the condition adjuster makes a pulling force of the pull-out device larger than the standard pulling force.

16. The processing device for the multi-core cable according to any one of claims 1 through 15, wherein:
the controller includes:
a first registration unit in which a standard twist strength of the plurality of electric wires is registered, and
a second registration unit in which a standard gripping force of the gripping device is registered,
the detection device is configured to detect the twist strength of the plurality of electric wires, and
in a case where the detected twist strength is stronger than the standard twist strength, the condition adjuster makes a gripping force of the gripping device larger than the standard gripping force.

17. The processing device for the multi-core cable according to any one of claims 1 through 16, wherein:
the controller includes:
a first registration unit in which a standard twist strength of the plurality of electric wires is registered, and
a second registration unit in which a standard rotation angle at which the rotation device rotates the holding member and the gripping member with respect to each other, and a standard rotation direction in which the rotation device rotates the holding member and the gripping member with respect to each other, are registered,
the detection device is configured to detect the twist strength of the plurality of electric wires, and
in a case where the detected twist strength is stronger than the standard twist strength, the condition adjuster makes a relative rotation angle, at which the holding member and the gripping member are rotated in the standard rotation direction, larger than the standard rotation angle, and after the rotation of the holding member and the gripping member in the standard rotation direction is finished, rotates the holding member and the gripping member in an opposite direction to the standard rotation direction at the same rotation angle as the rotation angle enlarged regarding the standard rotation direction.

18. The processing device for the multi-core cable according to any one of claims 14 through 17, wherein:
the detection device is configured to measure a rotation torque by which the rotation device rotates the holding member and the gripping member with respect to each other, and
in the first registration unit, a standard rotation torque by which the rotation device rotates the holding member and the gripping member with respect to each other is registered as the standard twist strength.
